# EUROPEAN PATENT APPLICATION

(11) **EP 4 043 164 A1**
(43) Date of publication of application: **17.08.2022**
(21) Application number: 21190264.8
(22) Date of filing: 09.08.2021
(51) Int. Cl.: B25J 13/08, B25J 19/02, B25J 17/00

(54) **A COMBINED POSITION AND TORQUE SENSOR UNIT FOR A ROBOT JOINT AXIS MODULE**

(30) Priority: 16.02.2021 US 202163149868 P
(71) Applicant: Hengstler GmbH, 78554 Aldingen (DE)
(72) Inventor: BÜCHER, Johann, 78554 Aldingen (DE); WÖHRSTEIN, Andreas, 78126 Königsfeld (DE)
(74) Representative: Riebling, Peter

(57) **Abstract**

The invention relates to a combined torque and position sensor unit, preferably for a robot joint axis module comprising: a second position encoder (5) coupled with an output shaft (13) of a motor drive (1, 4) for generating a second position data corresponding to the position of the output shaft (13) of the motor drive (1, 4), a second position encoder (21) coupled with a joint output shaft (17) for generating second position data corresponding to the position of the joint output shaft (17), a torque coupling element (15) providing a mechanical connection between the output shaft (13) of the motor drive (1, 4) and the joint output shaft (17), and an electronic interface (10) for the acquisition and/or conversion of the second and second position data provided by the second and second position encoders (5, 21), and for transmitting the data via a single-cable interface (9).

## Description

The present invention relates to a combined position and torque sensor unit according to the preamble of claim 1, preferably for a robot joint axis module.

In the field of service robotics, (e.g. AMR: autonomous mobile robots), there is a growing need for robots capable of physical interaction with humans to assist with daily life tasks. The desired coexistence of robotic systems and humans in the same physical domain (sharing the same workspace and actually cooperating in a physical manner) poses very fundamental problem of ensuring safety to the user and robot. Even without wrong programming, a robot, moving freely in a human environment, is potentially dangerous because of its large moving masses, powerful actuators, and unpredictably complex behavior. Design and programming of the robots exhibiting intrinsically safe behavior in a human domain are great challenges in robotics because such robots have to deal with unstructured time-varying environment.

However, despite the splendid means for sensing the environment (visual, audio, and haptics), the 6-axis force/torque sensors attached at the tip of the robot arm and a stereo vision system which is slow to track the changing environment in real-time, are only the abilities to anticipate and handle the collision. The rest parts of the robot body (forearm, elbow, upper arm, shoulder, and torso) are presenting the significant danger not only for human being, but also for the robot structure itself.

A robot joint axis module typically consists of a servo motor with a gearbox at the joint output and a break with multiple sensors. The weight of the components is crucial, and the space is very limited. The joint axis module preferably has a continuous hollow shaft for connecting and supplying subsequent axes and equipment.

It should be noted that such tasks under human supervision as transporting an object, leading the robot tip via force-following, performing the assembling tasks, require the processing algorithm of contact state. Finding the technical solution for trade-off between performance and safety is a main target of a new manipulation technology.

To cope with this issue, an active compliance control implying fast joint torque controlling based on measuring the applied external torque in each joint hast to be developed. A first approach of torque measurement is the integration of a torque sensor into each joint of the manipulator.

Impedance control of the robot arm generates compliant trajectory based on information on the measured external torque. Such approach has two main advantages: (1) sensor detects not only forces applied to the hand but also those exerted at other points on the manipulator, (2) and allows to increase the performance of fast movements by active vibration damping.

Several attempts have been made by researchers to improve joint torque control. C. Wu and R. P. Paul, "Manipulator compliance based on joint torque control," 1980 19th IEEE Conference on Decision and Control including the Symposium on Adaptive Processes, 1980, pp. 88-94, doi: 10.1109/CDC.1980.272025 propose a simple, wide bandwidth, torque servo system using strain-gauge-based joint torque sensor. A torque-controlled lightweight robot arm with high load to weight ratio was developed by Hirzinger et al. "Compliant motion control with stochastic active observers," Proceedings 2001 IEEE/RSJ International Conference on Intelligent Robots and Systems. Expanding the Societal Role of Robotics in the Next Millennium (Cat. No.01CH37180), 2001, pp. 1876-1881 vol.4, doi: 10.1109/IROS.2001.976347. Each joint of the arm is facilitated with strain-gauge-based torque sensor and position sensor and a piezo-brake.

T. Sakaki and T. Iwakane, "Impedance control of a manipulator using torque-controlled lightweight actuators," in IEEE Transactions on Industry Applications, vol. 28, no. 6, pp. 1399-1405, Nov.-Dec. 1992, doi: 10.1109/28.175294 propose to use a compact motor drive with embedded magnetostrictive torque sensor for impedance control of the robot arm. The approach of torque measurement through the elasticity of the harmonic drive flexsplines allows keeping the same stiffness and mechanical structure of the robot. This method requires strain gauges to be installed on the flexsplines.

An alternative method for increasing the safety level of robot arms interacting with humans is intentionally introducing compliance at the mechanical design level (passive control). The main idea here is decoupling the rotor inertia from the link inertia through use of passive elasticity. However, the robot control is complicated by many unknown parameters (e.g. actuator stiffness and damping). Furthermore, compliant transmission negatively affects the performance in term of increased oscillations and settling time.

To realize the safe physical contact of entire robot arm structure with human and to guarantee the collision avoidance, the primary idea is concentrated on the design of a whole-sensitive robot arm (by using distributed position and torque sensors in each joint). When contact with environment occurs, manipulator automatically generates compliant motion according to the measured external torque and time derivative of torque.

For a robot joint axis different torque measurement techniques are known in the art.

A torque transducer on the motor shaft includes a load cell structure supporting the load and deflecting a known amount in response to applied torque. Deformation of an elastic element of the torque transducer can be measured in different ways as follows:
- Electrical methods
- Methods based on electromagnetic phenomena
- Optical methods

These approaches include 1) noncontact transducers measuring relative displacement by light radiation detection, Hall effect, Faraday's law, and 2) contacting transducers measuring strain by means of strain gauges, potentiometers, piezoelectric effect, optical fibers.

### Electrical methods

Electrical torque measurement is essentially associated with strain gauges, capacitive or piezoelectric sensing. Strain gauge operation is based on variations in electrical resistance with strain. When force is applied, strain changes the electrical resistance of gauges proportionally to the load. Silicon semiconductor strain gauges are often used due to high sensitivity. Strain in silicon causes its bulk resistance to change, producing a signal 75 times stronger than conventional foil gauges where resistance changes are only due to dimensional changes in the resistor.

Despite such benefits of strain gauges as high linearity, about 0.03%-2.5% of full scale (FS), high resolution of 1-3 mV/V, their maximum allowable strain is close to their breaking point. To guarantee overload protection of transducers, mechanical stops limiting deflections of flexures are necessary.

Very stiff sensors may only deflect a few ten-thousandths of a millimeter. Production of limit stops with such small clearances is very difficult.

Strain-gauge-based torque/force sensors are greatly subjected to radial and other force components. Semiconductor and foil gauges require elaborate process for attachment by a specialist.

Another shortcoming of these sensors is their high sensitivity to electrical noise and temperature.

Piezoelectric torque sensors are similar in operation to strain gauges and based on the phenomenon, in which a crystal becomes electrically charged under the action of mechanical stress. High stiffness and strength enable sensors to be directly inserted into the torsion member. Extremely high accuracy (0.03% of FS) and high signal output are their main advantages.

Drawbacks restricting their application are high cost and a nonlinear output signal.

Many torque transducers are based on measuring the relative angle between two ends of a torsion bar. This principle was realized in a differential capacitive sensor for measurement of the relative angle. The transducer is noncontact, robust, and compact. Two rotatable electrodes are placed between two sensor plates. The relative angle between the two rotors and the absolute position of the rotor blades are calculated from measurement of capacitive coupling between different transmitting stator segments and a single receiving electrode.

Its drawback is high sensitivity to radial displacement and high cost. The relationship between the capacitor capacity and permittivity of the dielectric material between the capacitor plates also was used in prior approaches.

### Electromagnetic phenomena

Inductive sensors, magnetostriction, and magnetoelastic effect are used in electromagnetic sensors. Linear variable differential transformers (LVDT) are used in torque sensors.

The main advantage of LVDT is their high degree of robustness, remarkable resolution of about 0.1µm, good accuracy (0.01-0.3%), and easy installation and calibration.

High reliability is derived from their operation principle based on magnetic transfer eliminating physical contact across the sensing element. The strong relationship between core position and output voltage of secondary coils yields excellent resolution.

Inductive sensors suffer from reduction in signal at very low frequencies, and they are affected by electromagnetic noise.

The smallest LVDT weighs only 4.36 g and has an outer diameter of 4.77 mm, but its length of 22.4 mm complicates compact overall dimensions of the torque transducer.

The effect, in which stress applied to the material causes a change in its magnetization, is known as the Villari effect or magnetostriction phenomena. Magnetostrictive torque sensors consist of rotational shaft, having a magnetostrictive metal layer of a chevron configuration formed on the shaft, an exiting coil, and a pickup coil for detecting the magnetic property change of the magnetostrictive layer. When AC current is applied to the exciting core, the magnetostrictive layer is excited. Torque applied to the magnetostrictive element generates stress. Permeability is changed by the Villari effect, and inductive output is generated in the pickup coil with torsional load.

Advantages of the sensor are nonphysical contact between the shaft and housing, and high torsional stiffness.

Drawbacks are complicated manufacturing, bulky heavy structure, need for a robust magnetic shield, and insufficient performance (linearity of 3-5% FS, hysteresis of 2-3%, resolution of 10 mV/V).

### Optical approaches

An optical light source, an optical detector, and a solid object modifying the amount of light incident on the optical detector are necessary to measure displacement between unmovable and flexible parts of the optical torque sensor. Photosensors have such drawbacks as nonlinearity and temperature sensitivity, but they are considerably more reliable, cheap, and simplified in design than other sensors. A displacement is detected by interrupting light between source and detector, changing the intensity of reflected light, or the relative movement of source and detector. They using a split photosensor to detect displacement of the light source caused by applied force in two directions. Compared to conventional strain gauge-based transducers, optical sensors are more compact, lightweight, and cheap, but they have complicated calibration due to nonlinear output, require application of DSP for real-time computation of measured force, and have an average accuracy of 5% FS.

### Object of Invention

It is the object of the present invention to improve robot joint torque and position measurement for a robot joint axis module for safe physical interaction of the robot with surroundings.

Further objects of the invention are to improve customer satisfaction in regard of easily mounting and removing the robot joint torque and position measurement unit at low cost, reduce wiring complexity of additional sensors, generate higher torque output at lower thermal footprint, increase performance of robot, reduce overall cost for setup and installation by simplify encoder interface and allow easy connection and wiring of additional sensors, and providing technology for advanced inverter technology, single cable solution and advanced robot control.

In order to solve the above problems, the present invention proposes a combined torque and position sensor unit according to claim 1.

Claim 16 is directed to a robot joint axis module comprising said combined torque and position sensor unit.

Preferred embodiments of the invention and advantageous features are subject of the dependent claims.

The present invention is based on a calculation of torque by measuring the angle of twist of a torsion element through detection of differences in the rotation position at opposite sides of the torsion element and preferably using an optical encoder.

A robot joint axis module typically comprises the following components: a servo motor, a motor side feedback encoder, a gear box, e.g. harmonic drive, a motor temperature sensor, a motor connector and a cable for power supply, break control, temperature sensor data and encoder data.

The present invention provides a robot joint axis module preferably comprising one or several of the additional features like a first position encoder at the gearbox output, a joint side torque sensor, a gearbox accelerometer, a gearbox temperature sensor, a break, a sensor-hub, a single cable interface, an advanced drive.

In a preferred embodiment, the present invention allows construction of an advanced inverter for power supply of the motor resulting in a smoother, cooler operation of a robot by accurate force control.

Smoother and cooler operation can be achieved by better feedback information of the position encoder. Smoother and cooler operation means better accuracy, less oscillation and vibration and less power loss. This can be improved by using a position encoder with a more accurate feedback information with higher resolution combined with additional and accurate force/torque information, the inverter can achieve much smoother and cooler operation with reduced loss.

In another preferred embodiment, the present invention allows connecting multiple feedback devices and sensors via a single feedback interface in form of a sensor-hub for dynamic control, collision detection and safe operation of robot in dynamic environments.

Generally, multiple sensors are required for dynamic control and collision detection at safe operations of robots in a dynamic environment. Space in combination with moving cables are very limited at robots. The present invention allows to transfer sensor information of multiple sensors through a single cable preferably using a SCS open link interface. This reduces the number of moving parts, required space and mass for cabling and results in a more dynamical collision detection and safe operation of the robot.

SCS open link is a safety motor feedback protocol for communication between the motor and the motor drive, intended for high-performance and bi-directional data exchange, as for example for exchanging encoder position data over two data lines. SCS open link is based on the RS-485 standard and enables simple, cost-efficient but yet a reliable device interface up to 100 m transmission distance. The SCS open link interface protocol is suitable for use in functional safety systems up to SIL3 level. SCS open link allows communication over encoder power lines so that only 2 wires needed for communication and power supply. Additionally, SCS open link is an open standard and allows connection of sub-slaves, e.g. condition monitoring sensors, converters, sensor hubs, to the network.

A preferred embodiment of the invention provides high data throughput capabilities for load condition monitoring and motor health analysis.

In dynamic environments the load conditions are changing very fast. The motor health can only be analyzed based on real time data. According to the invention, a combined encoder and torque sensor unit with a high-speed encoder interface provides real time data for load condition monitoring and heath analysis. A combined encoder and torque sensor unit result in smaller size and higher performance. The motor health can be dynamically analyzed because the data of the encoder and torque sensor unit would reflect the actual situation vs. average information where dynamic information will be lost.

The invention preferably allows acquisition of a safe absolute position of the motor.

To get an absolute position signal, the present invention proposes to comparing information of two independent position encoders with a fixed relation. The position encoders used for getting an absolute position information do not need to be absolute position encoders because there is a fixed relation between the two position encoders. The evaluated high-resolution absolute position information can be used as a servo motor feedback encoder. To get an absolute position information, the position date of the servo motor feedback encoder can be combined with the position data of the first position encoder.

Furthermore, the first position encoder is preferably combined with second position encoder to form a torque sensor, so the required space for a first position encoder and a second position encoder (torque sensor) can be halved, because the two position encoders can use the same mechanical and electronic components.

Tolerances due to assembly of the first and second position encoders and other errors that lead to a loss of accuracy can be compensated by an automatic adjustment.

The advantages of the present invention are obvious. The sensors and electronics are easily mounted, removed and have lower cost. This reduces wiring complexity even with additional sensors, e.g. gearbox, torque, accelerometer, further encoders.

The robot joint has a lower thermal footprint, higher torque output, an increased performance regarding dynamic stiffness, higher bandwidth, lower tracking errors.

The invention simplifies the encoder interface for connecting further encoders and allows additional sensors to be wired easily.

The technology based on the invention allows for an advanced inverter technology, provides the use of SCS open link and leads to an advanced robot control.

In a preferred embodiment of the invention a single cable interface for a combined position and torque sensor with integrated sensor-hub for additional sensors is provided. This requires only one electrical interface in form of the sensor-hub to connect multiple sensors to a single cable solution in combination with a servo motor feedback encoder by SCS open link 2-wire.

There is preferably a single cycle data exchange in real time for all relevant sensors, e.g. the servo motor feedback encoder, the first position encoder and the second position encoder (torque sensor). Safety data and data of additional sensors can be transmitted with the same high frequency in alternating cycles.

In another preferred embodiment of the invention, the sensors and electronics require a reduced space and weight due to combination of multiple sensors. The first and second position encoders for generating torque and position information preferably use the same mechanics and electronics.

Preferably, a torque coupling element between the transmission (OD interface) and the joint output (ID interface) is used. A double disc flange for a code disk of a first position sensor of the first position encoder and a code disc of a second position sensor of the second position encoder (torque sensor) are preferably combined to an integrated torque and position sensor unit.

The code discs for the first position sensor of the first position encoder and second position sensor of the second position encoder (torque sensor) are preferably made out of glass, metal, plastic or directly printed or lasered to the torque coupling element.

The construction principles according to the invention make it possible to implement the position sensors preferably as light sensors with a narrow width. Therefore, the new torque sensor of a robot joint does not require redesign of the joint and cause minimal modification in kinematics and dynamics.

In contrast to a use of electromagnetic sensors, interferences and noise created by electrical current passing through the DC motor at each joint of the robot arm will not affect the optical sensing elements of the first and second position sensors.

The angle of rotation of the moving part (torque coupling element) enables the maximum expected torque to be exploiting as wide range of detector sensitivity as possible and is only determined by the mechanical properties. Due to a special encoding, the largest possible range of detector sensitivity can be achieved. This results in a high signal-to-noise ratio and a high sensor resolution.

Torsional stiffness of the sensor will not considerably reduce the natural frequency of the robot arm. While the position accuracy can significantly be improved due to the usage of two position sensors. This introduces the trade-off in stiffness maximization while maintaining high sensitivity.

One difficulty in design of the torque sensor is hysteresis elimination. Most metals used as flexures in a torque coupling element have very little hysteresis. Bolted, press fit, and welded joints near the flexure of the torque coupling element introduce hysteresis. Hence, mechanical structure of the torque coupling element should be machined from a single piece of metal. Ideally the single piece torque coupling element includes a laser coding for the position/torque sensing.

Due to the compact design of the torque coupling element, the influence from any of the non-torsional components of load could be canceled to guarantee precise measurement of torque.

Due to the combination of position and torque measurement, the behavior of the sensor element output and the mechanical structure can be designed to be linear.

The combined position and torque sensor unit is simple to manufacture, low-cost, and robust.

Optical approaches of torque measurement satisfy the demands of compact size, light in weight and robustness. The small influence of electrical noise created by DC motors on output signal of optical sensors results in high signal-to-noise ratio and sensor resolution. Therefore, it makes sense to employ this technique to measure torque in robot joints.

The invention has several advantages compared to the known prior art
- Improved customer satisfaction in regard of easily mounted and removed at lower cost.
- Reduced wiring complexity of additional sensors, e.g. gearbox, torque, accelerometer, first position encoder.
- Generates higher torque output at lower thermal footprint.
- Increase performance (dynamic stiffness, higher bandwidth, lower tracking errors)
- Reduced overall cost for setup and installation by simplify encoder interface for the first position encoder and allows easy connection and wiring of additional sensors.
- Create market differentiation by providing technology for advanced inverter technology, single cable solution by SCS open link and advanced robot control.
- The optical torque sensors are characterized by good accuracy, high signal-to-noise ratio, compact sizes, light in weight, easy manufacturing, high signal bandwidth, robustness, low cost, and simple calibration procedure.
- Each robot joint can be equipped with an optical first position encoder and a second position encoder (torque sensor) directly connected to the output shaft of harmonic drive. Both position encoders use the same measurement technology in form of high accurate and high-resolution optical position sensors.

The combination of the servo motor feedback encoder and further position encoders for receiving additional absolute position data and torque value allows for the generation of the following information:

Servo motor feedback encoder
- High accurate and high-resolution position/speed/acceleration information for smoother and cooler operation of the servo motor drive.
- A safe absolute position, if position of motor feedback encoder == position of first position encoder *n ± tolerance (gearbox), wherein n is an integer multiple of the position data of the first position encoder.
- A safe absolute position will be available for functional safety evaluation of the robot arm and the corresponding axes with the Tool Center Point (TCP). A Tool Center Point is used to create the necessary adjustment. This allows the controller to shift the coordinate system to keep track of the tool instead of the arm's end.

First position encoder (at gearbox output)
- Safe absolute position if first position == second position ± torque tolerance
- It is better because a safe absolute position will be available for functional safety evaluation of the robot arm and the corresponding axes with the TCP.

Second position encoder (at joint output)
- Torque = position of first position encoder - position of second position encoder. The torque information is generated as the difference out of two high accurate and high-resolution absolute position encoders. It is characterized by very good accuracy, a very high signal-to-noise ratio, compact sizes and light in weight because two position encoders at the place of one, easy manufacturing, high signal bandwidth, robustness, low cost, and simple calibration procedure to compensate all manufacturing tolerances.
- Precise force/torque-control of the robot arm and the corresponding axes with the TCP.

In the following, preferred embodiments of the invention are described with reference to the drawings.
Fig. 1 shows a state of the art architecture of a robot joint axis module.
Fig. 2 shows an architecture similar to Figure 1 with discrete sensors connected to a sensor-hub/converter.
Fig. 3 shows an architecture according to the invention with a combined torque and position sensor unit, sensor-hub for additional sensors.
Fig. 4. shows an architecture according to the invention with a combined torque and position sensor unit with integrated sensor-hub for additional sensors.
Fig. 5 shows data telegrams for a combined position and torque sensor.
Fig. 6. shows design principles for a new combined torque and position sensor unit with integrated sensor-hub for additional sensors (cross-section).
Fig. 7. shows design principles for a new combined torque and position sensor unit with integrated sensor-hub for additional sensors (top view).

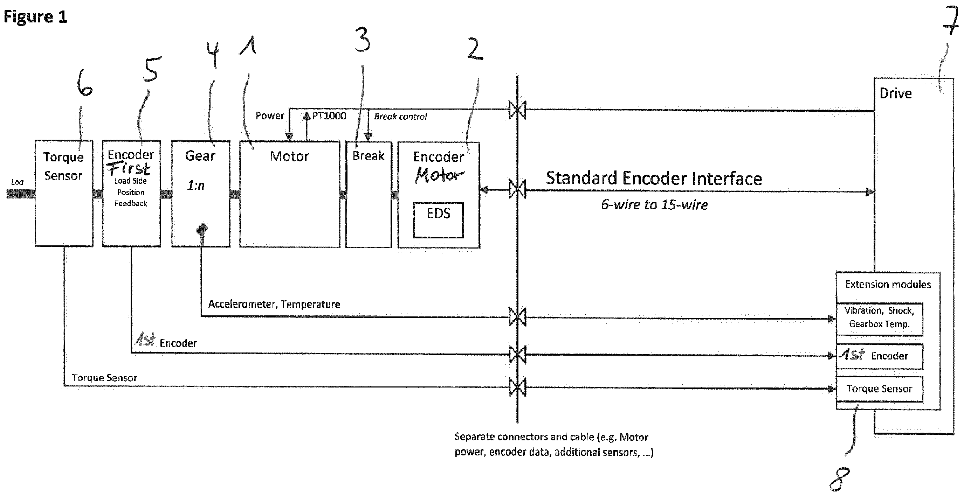

Figure 1 depicts a known architecture of a robot joint drive comprising many discrete sensors, a relative complex wiring consisting of separate connectors and cables for every sensor/actuator, and a limited performance with respect to dynamic stiffness, bandwidth, tracking errors.

The joint drive comprises a servo motor 1 coupled with a servo motor feedback encoder 2 and a break 3. The motor shaft is coupled with a gearbox 4

A motor drive 7 is connected to the motor 1, the break 3 and the servo motor feedback encoder 2 via a standard encoder interface with a 6-wire to 15-wire cable for power supply and data transmission.

Optionally, additional sensors can be installed and connected to the motor drive 7. There can be installed an accelerometer and a temperature sensor at the gearbox 4 which are connected via separate connectors and cables to extension modules 8 at the motor drive 7. These additional sensors enable measurement of vibration, shock and gearbox temperature.

Optionally, a further (first) position encoder 5 can be installed at the output of the gearbox 4 and connected via a separate connector and cable to the extension modules 8 of the motor drive 7.

Also, a discrete torque sensor 6 can be installed at the output of the gearbox 4 for measuring torque. The torque sensor 6 is connected via separate connector and cable to the extension module 8 of the motor drive.

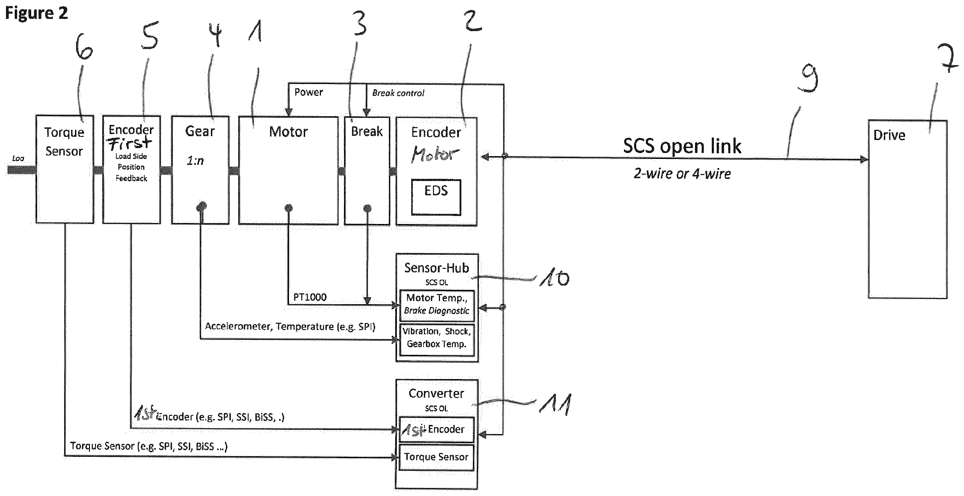

Figure 2 shows an advanced architecture of a robot joint axis module comprising many discrete sensors connected via a sensor-hub and a converter to a motor drive 7 by SCS open link interface 9 (2-wire or 4-wire).

Similar to Figure 1, the joint drive comprises a servo motor 1, a servo motor feedback encoder 2, a break 3, a gearbox 4, a first position encoder 5 and a discrete torque sensor 6. The servo motor 1, the servo motor feedback encoder 2 and the break are directly connected via the SCS open link interface 9 to the motor drive 7.

Additional sensors, such as an accelerometer and a temperature sensor at the gearbox 4, a temperature sensor at the servo motor 1 and a break diagnostic sensor at the break 3 are connected to a sensor-hub 10 at the motor side. The sensor hub 10 provides for a conversion of the signals of the sensors into the data format used by the SCS open link 9.

The first position encoder 5 and the torque sensor 6 are connected via a converter 11 to the SCS open link interface 9. The converter 11 converts the signals of the first position encoder 5 and the torque sensor 6 into the data format used by the SCS open link interface 9.

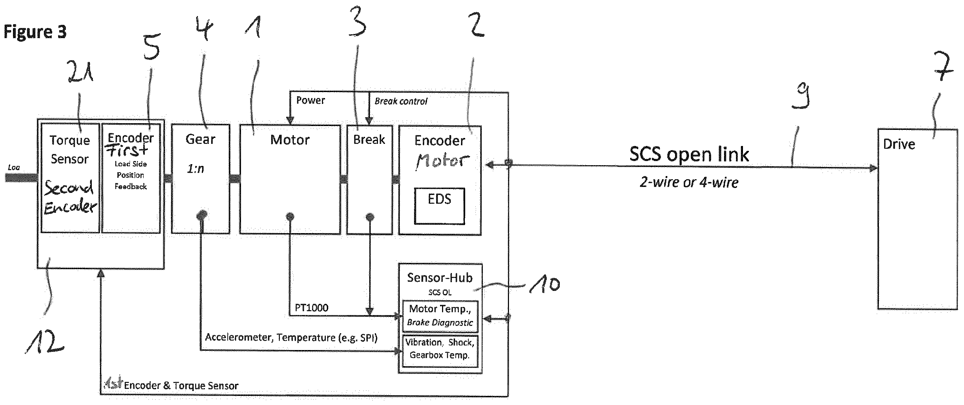

Figure 3 shows a robot joint axis module with a combined torque and position sensor unit 12 which include the first position encoder 5 and a second position encoder 21. The first position encoder 5 and the second position encoder 21 are arranged after the gear box 4. The combined torque and position sensor unit 12 also comprise an integrated SCS open link interface for connection to the motor drive 7 via SCS open link 9. Additionally, further sensors such as an accelerometer and a temperature sensor at the gearbox 4, a temperature sensor at the servo motor 1 and a break diagnostic sensor at the break 3 are connected to a sensor hub 10 at the motor side which is connected to the motor drive 7 by SCS open link interface 9.

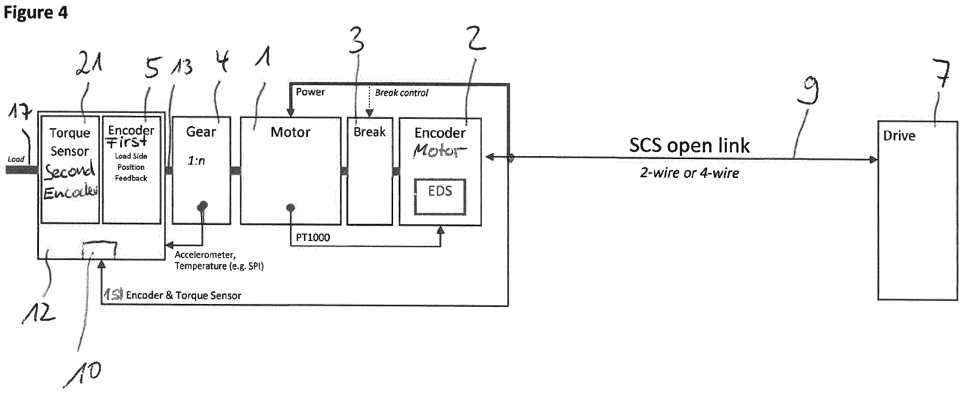

Figure 4 shows a combined torque and position sensor unit 12 with integrated sensor-hub 10 for additional sensors connected to a drive by SCS open link (2-wire or 4-wire). Different to Figure 3 there is no separate sensor-hub. The data of the accelerometer and temperature sensors of the gear box 4 are fed directly to the combined torque and position sensor unit 12 where the data is converted to the SCS open link format and transmitted via the SCS open link interface 9 to the motor drive 7.

The temperature data of the motor 1 is fed to the servo motor feedback encoder 2 and converted to SCS open link format for transmission via the SCS open link interface 9 to the motor drive 7.

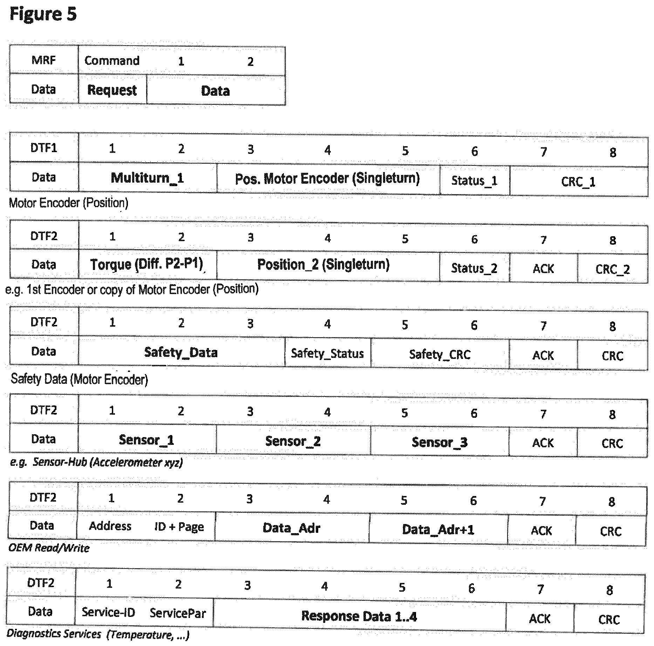

Figure 5 shows a sequence of primary and secondary data exchange. The invention allows a data transmission for first position data, first position data, second position data or torque value in a single cycle. Benefits are fast data transmission and low overhead. The dual channel data can be used for absolute safe position detection.

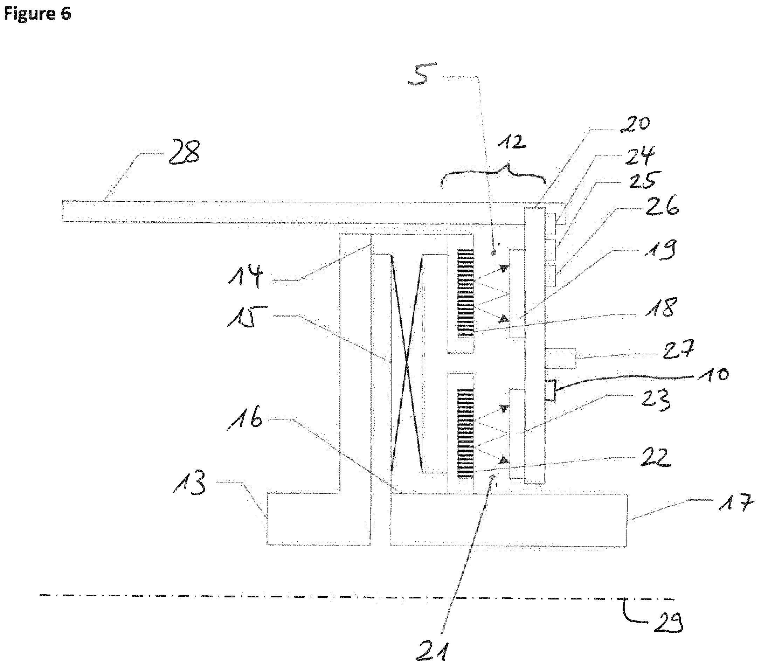

Figure 6 with further reference to Figure 4 schematically shows a sectional view of a combined torque and position sensor unit 12 with an integrated sensor-hub 10 at the output of a robot joint gearbox 4. A shaft 13 at the gearbox output has a flange which forms an OD-interface 14 concentric to a rotational axis 29. An outer end of a torque coupling element 15 is connected to the OD-interface 13, and an inner end of the torque coupling element 15 is connected to an ID-interface 16 connected to a shaft 17 of the robot joint output. The torque coupling element 15 has an elastic part between its outer end (OD) and inner end (ID) which can be adapted to different torque ranges by design. The elastic part can be designed for a large torque range, due to a high sensor resolution of the combined torque and position sensor unit 12.

The first position encoder 5 detects the position of the gearbox output at the OD-Interface 13. The first position encoder 5 is preferably an optical encoder but also can be an inductive, magnetically or capacitive encoder. The first position encoder 5 comprises a first code disc 18 attached to the outer end of the torque coupling element 15 (OD-interface 14) and a first position sensor 19 preferably arranged on a printed circuit board 20 fixed opposite the first code disk 18. The first position sensor 19 and the first code disk 18 form a reflective first position encoder 5.

The second position encoder 21 detects the position of shaft 17 of the joint output at the ID-Interface 16 and is used together with the first position encoder 5 for torque measurement. The second position encoder 21 is preferably an optical encoder but also can be an inductive, magnetically or capacitive encoder. The second position encoder 21 comprises a second code disc 22 attached to the inner end of the torque coupling element 15 (ID-interface 16) and a second position sensor 23 preferably arranged on the printed circuit board 20 fixed opposite the first and second code disks 18, 22. The second position sensor 23 and the second code disk 22 form a reflective position encoders 21.

Preferably, the electronics on the printed circuit board 20 includes a sensor-hub 10 for data acquisition and conversion. Additionally, a vibration sensor 24 (accelerometer) and/or a temperature sensor 25 arranged on the printed circuit board 20. Optionally, there is an input 26 for additional sensors on the printed circuit board 20. The sensor data are fed to the sensor-hub 10 and converted to SCS open link format. A connector 27 for connecting the sensor-hub 10 to SCS open link interface 9 is arranged on the printed circuit board 20.

The above described elements of the robot joint module are preferably arranged within the motor / gearbox housing 28.

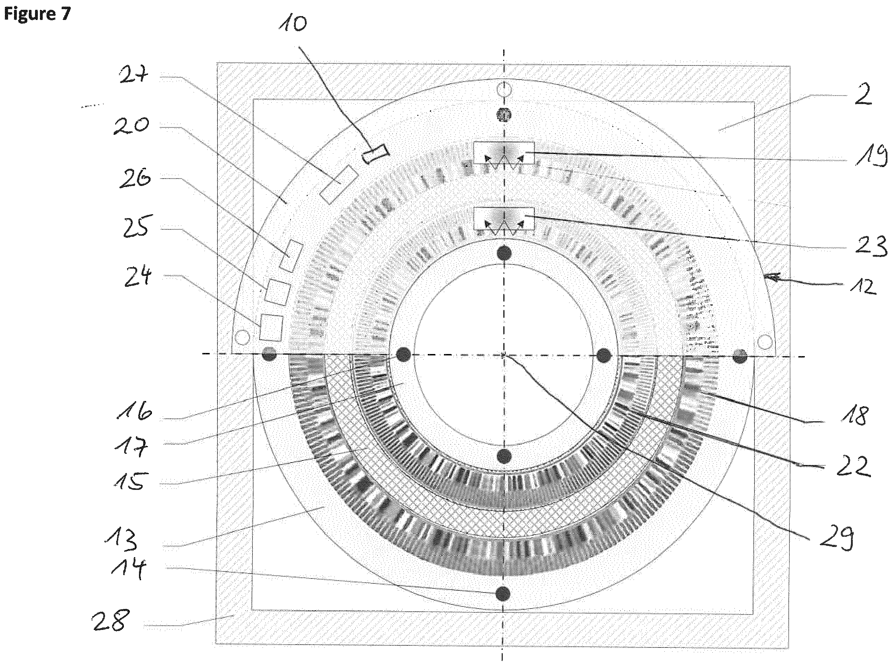

Figure 7 schematically shows a top view of the new combined torque and position sensor unit 12 with integrated sensor-hub 10 according to Figure 6.

The torque coupling element 15 is arranged inside of the motor / gearbox housing 28 and coupled at its outer end to the hollow shaft 13 at the OD-interface 14 of the gearbox output and with its inner end to the ID-interface 16 of the hollow shaft 17 of the joint output. The torque coupling element 15 has an outer disk flange forming the first code disk 18 for the first position sensor 19 and an inner disk flange forming the second code disk 22 for the second position sensor 23.

The first position sensor 19 and the second position sensor 23 are arranged on the printed circuit board 20 which includes the SCS open link interface for connecting to the SCS open link serial interface 9 via a suitable connector 27. Additional sensors like a vibration sensor 24 and a temperature sensor 25 are arranged on the printed circuit board 20. There is in input 26 for connecting further additional sensors.

The printed circuit board 20 (PCB) is preferably connected to the housing 28 of motor/gearbox or robot arm and accommodates the position sensors 19, 23 for double position detection (first and second position encoders) and for torque determination.

The electrical interfaces are also located on the printed circuit board 20. Preferably, an electrical interface for single-cable technology like SCS open link is located on the printed circuit board 20.

The servo motor feedback encoder 2 (see Figure 1-4) is coupled with the motor 1 and provides rotational position data of the motor 1. The first position encoder 5 which is coupled with the output of the gearbox 4 provides rotational position data of the output shaft 13 of the gearbox 4. The second position encoder 21 is coupled with the joint output and provides the rotational position data of the shaft 17 of the joint output.

A safe absolute position of the motor 1 can be derived from a comparison of the position data of the servo motor feedback encoder 2 and an integer multiple of the position data of the first position encoder 5, considering the tolerances of the gearbox 4.

A safe absolute position of the output shaft 13 of the gearbox can be derived from a comparison of the position data of the first position encoder 5 and the position data of the second position encoder 21 considering the torque tolerances.

The torque acting on the torque coupling element 15 can be derived from the difference of the position data of the first position encoder 5 and the position data of the second position encoder 21.

Preferably, there are further sensors for condition monitoring arranged on the printed circuit board 20 which are also connected via the electrical interface for single-cable technology. The printed circuit board 20 not only is designed as an electrical interface for single-cable technology but also acts as a converter for position encoders and / or as a sensor hub for connecting further sensors for condition monitoring. The printed circuit board 20 may have electronics for preprocessing the sensor signals for position and torque and / or for further sensors for condition monitoring. The printed circuit board 20 may have additional inputs for further sensors for condition monitoring. The printed circuit board 20 relocates further sensors for condition monitoring via one or more flexible circuit board areas, e.g. to place accelerometers for vibration measurement or temperature sensors for temperature measurement in the drive system as optimally as possible.

### List of reference numerals

- 1: motor
- 2: servo motor feedback encoder
- 3: brake
- 4: gearbox
- 5: first position encoder
- 6: torque sensor
- 7: motor drive
- 8: extension modules
- 9: SCS open link interface
- 10: sensor hub
- 11: converter
- 12: combined torque and position sensor unit
- 13: shaft (gearbox output)
- 14: OD-interface
- 15: torque coupling element
- 16: ID-interface
- 17: shaft (joint output)
- 18: first code disk
- 19: first position sensor
- 20: printed circuit board
- 21: second position encoder (torque sensor)
- 22: second code disc
- 23: second position sensor
- 24: vibration sensor
- 25: temperature sensor
- 26: sensor input
- 27: connector
- 28: housing
- 29: rotational axis

## Claims

1. A combined torque and position sensor unit (12), preferably for a robot joint axis module, comprising:
a first position encoder (5) coupled with an output shaft (13) of a motor drive (1, 4) for generating first position data corresponding to the position of the output shaft (13) of the motor drive (1, 4),
a second position encoder (21) coupled with a joint output shaft (17) for generating second position data corresponding to the position of the joint output shaft (17),
a torque coupling element (15) providing a mechanical connection between the output shaft (13) of the motor drive (1, 4) and the joint output shaft (17), and
an electronic interface (10, 11) for the acquisition and/or conversion of the first and second position data provided by the first and second position encoders (5, 21), and for transmitting the position data via a single-cable interface (9).

2. A combined torque and position sensor unit of claim 1, **characterized in that** it comprises data processing means (7) for receiving the first and second position data provided by the electronic interface (10, 11) at the position encoders (5, 21) and for calculating the position of the output shaft (13) of the motor drive and/or the position of the joint axis output shaft (17) and/or a torque value between the output shaft (13) of the motor drive and the joint output shaft (17).

3. A combined torque and position sensor unit of any of claims 1 or 2, **characterized in that** any of the first and second position encoders (5, 21) is either an optical or inductive or magnetic or capacitive position encoder.

4. A combined torque and position sensor unit of any of claims 1 to 3, **characterized in that** the first position data and/or the second position data contain absolute position information and / or incremental position information.

5. A combined torque and position sensor unit of claim 4, **characterized in that characterized in that** the absolute position information comprises a pseudo random code.

6. A combined torque and position sensor unit of any of claims 4 or 5, **characterized in that** a safe absolute position of the output shaft (13) of the motor drive is generated by a safe evaluation of the first position data with the second position data ± a torque tolerance (Safe absolute position, if 2nd position == 3rd position ± torque tolerance).

7. A combined torque and position sensor unit of any of claims 1 to 6, **characterized in that** the torque value is generated by calculating the difference between the first position data and the second position data.

8. A combined torque and position sensor unit of any of claims 1 to 7, **characterized in that** it comprises additional sensors including a vibration sensor (24) and/or a temperature sensor (25).

9. A combined torque and position sensor unit of any of claims 1 to 8, **characterized in that** the torque coupling element (15) comprises an elastic member.

10. A combined torque and position sensor unit of any of claims 1 to 9, **characterized in that** the torque coupling element (15) comprises at least one data code for the first position encoder (5) on an OD interface (14) which is connected to the output shaft (13) of the motor drive.

11. A combined torque and position sensor unit of any of claims 1 to 10, **characterized in that** the torque coupling element (15) comprises at least one data code for the second position encoder (21) on an ID interface (16) which is connected to the joint output shaft (17).

12. A combined torque and position sensor unit of any of claims 1 to 11, **characterized in that** the data codes for the second and second position encoders (5, 21) are arranged directly at the torque coupling element (15).

13. A combined torque and position sensor unit of any of claims 1 to 11, **characterized in that** that the data codes for the second and second position encoders (5, 21) are designed as a code disks (18, 22).

14. A combined torque and position sensor unit of any of claims 1 to 13, **characterized in that** the data codes for the second and second position encoders (5, 21) are designed as a code disks (18, 22) which are attached to the torque coupling element (15).

15. A combined torque and position sensor unit of any of claims 1 to 14, **characterized in that** that the torque coupling element (15) is supported by ball bearings.

16. A robot joint axis module comprising a combined torque and position sensor unit according to one of the foregoing claims.

## Amended claims

### Amended claims in accordance with Rule 137(2) EPC.

1. A combined torque and position sensor unit (12), preferably for a robot joint axis module, comprising:
a first position encoder (5) coupled with an output shaft (13) of a motor drive (1, 4) for generating first position data corresponding to the position of the output shaft (13) of the motor drive (1, 4),
a second position encoder (21) coupled with a joint output shaft (17) for generating second position data corresponding to the position of the joint output shaft (17),
a torque coupling element (15) providing a mechanical connection between the output shaft (13) of the motor drive (1, 4) and the joint output shaft (17), and
an electronic interface (10, 11) for the acquisition and/or conversion of the first and second position data provided by the first and second position encoders (5, 21), and for transmitting the position data via a single-cable interface (9), **characterized in that** the torque coupling element (15) comprises at least one data code for the first position encoder (5) on an OD interface (14) which is connected to the output shaft (13) of the motor drive and at least one data code for the second position encoder (21) on an ID interface (16) which is connected to the joint output shaft (17).

2. A combined torque and position sensor unit of claim 1, **characterized in that** it comprises data processing means (7) for receiving the first and second position data provided by the electronic interface (10, 11) at the position encoders (5, 21) and for calculating the position of the output shaft (13) of the motor drive and/or the position of the joint axis output shaft (17) and/or a torque value between the output shaft (13) of the motor drive and the joint output shaft (17).

3. A combined torque and position sensor unit of any of claims 1 or 2, **characterized in that** any of the first and second position encoders (5, 21) is either an optical or inductive or magnetic or capacitive position encoder.

4. A combined torque and position sensor unit of any of claims 1 to 3, **characterized in that** the first position data and/or the second position data contain absolute position information and / or incremental position information.

5. A combined torque and position sensor unit of claim 4, **characterized in that characterized in that** the absolute position information comprises a pseudo random code.

6. A combined torque and position sensor unit of any of claims 4 or 5, **characterized in that** a safe absolute position of the output shaft (13) of the motor drive is generated by a safe evaluation of the first position data with the second position data ± a torque tolerance .

7. A combined torque and position sensor unit of any of claims 1 to 6, **characterized in that** the torque value is generated by calculating the difference between the first position data and the second position data.

8. A combined torque and position sensor unit of any of claims 1 to 7, **characterized in that** it comprises additional sensors including a vibration sensor (24) and/or a temperature sensor (25).

9. A combined torque and position sensor unit of any of claims 1 to 8, **characterized in that** the torque coupling element (15) comprises an elastic member.

10. A combined torque and position sensor unit of any of claims 1 to 9, **characterized in that** the data codes for the first and second position encoders (5, 21) are arranged directly at the torque coupling element (15).

11. A combined torque and position sensor unit of any of claims 1 to 10, **characterized in that** that the data codes for the first and second position encoders (5, 21) are designed as a code disks (18, 22).

12. A combined torque and position sensor unit of any of claims 1 to 11, **characterized in that** the data codes for the first and second position encoders (5, 21) are designed as a code disks (18, 22) which are attached to the torque coupling element (15).

13. A combined torque and position sensor unit of any of claims 1 to 12, **characterized in that** that the torque coupling element (15) is supported by ball bearings.

14. A robot joint axis module comprising a combined torque and position sensor unit according to one of the foregoing claims.
